# EUROPÄISCHE PATENTSCHRIFT

(11) **EP 2 552 984 B1**
(45) Veröffentlichungstag und Bekanntmachung des Hinweises auf die Patenterteilung: **12.02.2014**
(21) Anmeldenummer: 11709693.3
(22) Anmeldetag: 16.03.2011
(51) Int. Cl.: C08G 18/09, C08G 18/61, C08G 77/388, C08J 9/00, C08L 83/10

(54) **SILICONHALTIGER POLYISOCYANURATSCHAUM**
SILICON-CONTAINING POLYISOCYANURATE FOAM
MOUSSE DE POLYISOCYANURATE CONTENANT DE LA SILICONE

(30) Priorität: 30.03.2010 DE 102010003477
(43) Veröffentlichungstag der Anmeldung: 06.02.2013
(73) Patentinhaber: Wacker Chemie AG, 81737 München (DE)
(72) Erfinder: CREMER, Jens, 67071 Ludwigshafen (DE)
(74) Vertreter: Budczinski, Angelika
(86) Internationale Anmeldenummer: PCT/EP2011/053974
(87) Internationale Veröffentlichungsnummer: WO 2011/124454

(56) Entgegenhaltungen:
- WO-A1-2009/071510
- WO-A1-2009/130194
- WO-A1-2010/069821

## Beschreibung

Die Erfindung betrifft verschäumbare Zubereitungen auf der Basis von Organosiliciumverbindungen, siliconhaltige Polyisocyanuratschäume mit niedrigen Dichten sowie Verfahren zu deren Herstellung.

Obwohl es in den letzten Jahrzehnten nicht an intensiven Forschungsaktivitäten gefehlt hat, die Flammverzögerungseigenschaften von Polymerschäumen zu verbessern, ist es bisher nicht gelungen stark brandgehemmte PU-Schäume im Markt zu etablieren.

Als ein relativ erfolgreicher Ansatz zur Darstellung von brandgehemmten Polyurethanschäumen hat sich die Polyisocyanuratchemie herausgestellt. Bei der Herstellung entsprechender Schäume erfolgt üblicherweise eine Umsetzung von Polyisocyanaten mit Verbindungen mit gegenüber Isocyanatgruppen reaktiven Wasserstoffatomen z.B. Polypropylenglykole, wobei der Isocyanatindex mindestens 180 beträgt. Dabei bilden sich in Gegenwart eines Trimerisierungskatalysators zusätzlich zu den Urethan- auch Isocyanuratstrukturen. Die so erhaltenen Polyisocyanurat-(PIR)-Schäume sind typischerweise geschlossenzellige Hartschäume, die unter allen Polyurethanschaumstofftypen die besten Brandeigenschaften in Bezug auf Brandhemmung aufweisen.

Im Allgemeinen werden bei der Herstellung von Polyisocyanurat-Hartschaumstoffen sowohl Treib- und Gelkatalysatoren, meistens Amine, als auch Trimerisierungskatalysatoren als Katalysatoren eingesetzt. Auch Katalysatorsysteme bestehend aus einer Mischung verschiedener Katalysatoren finden sich im Stand der Technik. Diese PIR-Hartschäume werden üblicherweise unter Verwendung von physikalischen und chemischen Treibmitteln herge**stellt. Als physikalische Treibmittel werden z.B. Fluorchlor**kohlenwasserstoffe (FCKWs), Wasserstofffluorkohlenwasserstoffe (HFKWs), Kohlenwasserstoffe sowie flüssiges Kohlenstoffdioxid eingesetzt, während als chemische Treibmittel hauptsächlich Wasser und Carbonsäuren Verwendung finden.

Obwohl die PIR-Hartschäume bereits über relativ gute Brandeigenschaften verfügen, besteht dennoch großer Verbesserungsbedarf, da zum Erhalt einer optimalen Brandhemmung hohe Zugaben von Flammschutzmitteln notwendig sind. Derartige Flammschutzmittel wirken sich zum einen negativ auf die Mechanik des resultierenden Schaums aus und sind darüber hinaus nicht immer toxikologisch unbedenklich.

Wünschenswert wäre demnach ein Hartschaum, welcher durch verbesserte Brandeigenschaften charakterisiert ist, gute Mechaniken bei geringen Schaumdichten aufweist und ohne den Zusatz von toxischen Flammschutzmitteln eingesetzt werden kann.

Ein solcher Weg zu brandgehemmten PU-Schäumen wird mit den Silicon-Polyurethan-Schäumen beschritten. Hierbei wird die in Standard-PU-Schäumen verwendete, gut brennbare Polyolkomponente durch schlecht-brennbare OH-terminierte Siloxane ersetzt. Durch den Einsatz von Silicon-Polyurethan-Copolymeren, d.h. von Polysiloxanen, die auch Polyurethan- und/oder Harnstoffeinheiten enthalten, ist es möglich, derartige brandgehemmte Schaumstoffe zu entwickeln, die neue und auf die jeweilige Anwendung genau zugeschnittene Kombinationen von Eigenschaften aufweisen.

Hierzu sei beispielsweise auf WO 2009130194A1 verwiesen, worin die Herstellung von Silicon-PIR-Hartschaumstoffen ausgehend von hyperverzweigten Alkylhydroxy-terminierten Siliconölen und im sog. "One-Shot-Verfahren" beschrieben ist.

Nachteilig ist hierbei jedoch die Tatsache, dass die Schaumstrukturen unterhalb von Schaumdichten mit 70 kg·m⁻³ nicht mehr vollständig geschlossenzellig sind. Dieser Effekt wird mit abnehmender Schaumdichten immer dominierender, so dass diese Schäume ihre isolierende Wirkung verlieren.

Gegenstand der Erfindung sind verschäumbare Zusammensetzungen enthaltend
Siloxane (A) der Formel

V- (NHC(O)R¹R²)ₚ₋ₘ₋ₙ(NHC(O)R¹R⁴[SiR₂O]ₐ-SiR₂R⁴R¹H)ₘ(NHC(O)NR⁵₂)ₙ (I),

worin
V einen p-wertigen Kohlenwasserstoffrest, der Heteroatome enthalten kann, bedeutet,
R gleich oder verschieden sein kann und einen einwertigen, gegebenenfalls substituierten Kohlenwasserstoffrest bedeutet,
R¹ gleich oder verschieden sein kann und -O-, -S- oder -NR³- bedeutet,
R² gleich oder verschieden sein kann und Wasserstoffatom und einwertige, gegebenenfalls substituierte Kohlenwasserstoffreste darstellt,
R³ gleich Wasserstoffatom oder einwertiger, gegebenenfalls substituierter Kohlenwasserstoffrest bedeutet,
R⁴ gleich oder verschieden sein kann und einen zweiwertigen, gegebenenfalls substituierten Kohlenwasserstoffrest bedeutet, der mit Heteroatomen unterbrochen sein kann,
R⁵ gleich oder verschieden sein kann und Wasserstoffatom oder einen gegebenenfalls substituierten Kohlenwasserstoffrest bedeutet,
a eine ganze Zahl größer oder gleich 1 bedeutet, bevorzugt 1 bis 1000, besonders bevorzugt 5 bis 500, insbesondere 10 bis **100**,
p eine ganze Zahl größer oder gleich 2, bevorzugt 2 bis 20, besonders bevorzugt 3 oder 4, bedeutet,
m eine ganze Zahl größer oder gleich 1, bevorzugt 1 bis 19, besonders bevorzugt 1 bis 3, bedeutet,
n eine ganze Zahl größer oder gleich 1, bevorzugt 1 bis 19, besonders bevorzugt 1 bis 3, bedeutet,
mit der Maßgabe, dass p größer oder gleich m+n ist,
   (B) Polyisocyanate und
   (G) Trimerisierungskatalysatoren.

Beispiele für R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexyl-reste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, De-cylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie O-, m-, p-Tolylreste, Xylylreste und Ethylphenylreste; Aralkylreste, wie der Benzylrest, der α-und der β-Phenylethylrest.

Beispiele für substituierte Kohlenwasserstoffreste R sind Alkoxyalkylenreste, wie Methoxymethylen- und Ethoxymethylenreste, Hydroxyalkylenreste, wie 2-Hydroxyethylenreste, und Aminoalkylenreste, wie Dimethylaminomethylen-, Diethylaminomethylen-, 2-Aminoethylen- und N-Methylaminoyethylenreste.

Bevorzugt handelt es sich bei Rest R um einwertige, gegebenenfalls substituierte Kohlenwasserstoffreste mit 1 bis 40 Kohlenstoffatomen, besonders bevorzugt um Kohlenwasserstoffreste mit 1 bis 6 Kohlenstoffatomen, insbesondere um den Methylrest.

Beispiele für R³ sind Wasserstoffatom und die für Rest R angegebenen Beispiele.

Bevorzugt handelt es sich bei Rest R³ um Wasserstoffatom.

Bevorzugt handelt es sich bei R¹ um -O-.

Beispiele für Reste R² sind Wasserstoffatom sowie die für Rest R genannten Beispiele.

Bevorzugt handelt es sich bei Rest R² um Kohlenwasserstoffreste mit 1 bis 6 Kohlenstoffatomen, besonders bevorzugt um den Methylrest.

Beispiele für Rest R⁴ sind Methylen-, Ethylen-, Propylen-, Butylen-, Pentylen-, Hexamethylen-, Methyloxyethylen-, also den Rest -CH₂-O-CH₂CH₂-, Toluolylen-, Methylen-bis-phenylen-, Phenylen-, Naphtylen-, Cyclohexylen- und Isophoronreste.

Bevorzugt handelt es sich bei R⁴ um zweiwertige, aliphatische Kohlenwasserstoffreste, die mit Heteroatomen unterbrochen sein können, besonders bevorzugt um Propylen-, Methylen- und Methyloxyethylenreste, bevorzugt Methylen- und Methyloxyethylenreste, insbesondere um den Methylenrest.

Beispiele für R⁵ sind die für R angegebenen Beispiele.

Bevorzugt handelt es sich bei R⁵ um Wasserstoffatom und gegebenenfalls mit Hydroxylgruppen substituierte Kohlenwasserstoff**reste,** besonders bevorzugt **um gegebenenfalls mit Hydroxylgrup**pen substituierte Kohlenwasserstoffreste, insbesondere um Alkylreste mit 1 bis 6 Kohlenstoffatomen und Hydroxyalkylreste mit 1 bis 6 Kohlenstoffatomen.

Beispiele für Rest V sind beliebige, bisher bekannte mehrwertige, aliphatische oder aromatische Kohlenwasserstoffreste, die Heteroatome aufweisen können, wie 1,3,4-Benzolreste, 1,3,5-Cyanuratreste, N,N,N'-Biuretreste, 4,4',4'' -Triphenylmethanreste und Poly((4-phenyl)-co-formaldehyd)reste.

Bevorzugt handelt es sich bei Rest V um mehrwertige Reste mit 1 bis 50 Kohlenstoffatomen, besonders bevorzugt mit 6 bis 30 Kohlenstoffatomen.

Bevorzugt handelt es sich bei V um mehrwertige, aromatische, gegebenenfalls Heteroatome enthaltende Kohlenwasserstoffreste, besonders bevorzugt um mehrwertige, aromatische, gegebenenfalls Stickstoff, Sauerstoff und Phosphor enthaltende Kohlenwasserstoffreste, insbesondere um mehrwertige aromatische, gegebenenfalls Stickstoff und Sauerstoff enthaltende Kohlenwasserstoffreste mit 6 bis 30 Kohlenstoffatomen.

In den erfindungsgemäß eingesetzten Siloxanen (A) der Formel (I) ist die Summe m+n bevorzugt gleich p.

Die erfindungsgemäß eingesetzten Siloxane (A) der Formel (I) haben eine Viskosität von bevorzugt 100 bis 10 000 mPas, besonders bevorzugt 500 bis 5000 mPas, jeweils bei 25°C und gemessen gemäß ASTM D 4283.

Die erfindungsgemäß eingesetzten Siloxane (A) sind bevorzugt hyperverzweigt.

Beispiele für erfindungsgemäß eingesetzte Siloxane (A) sind 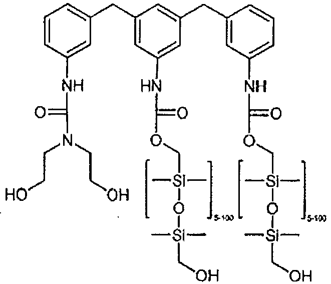 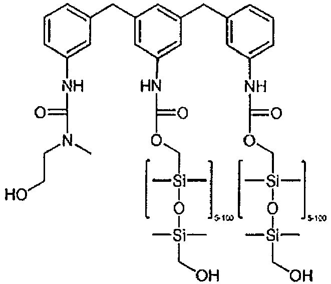 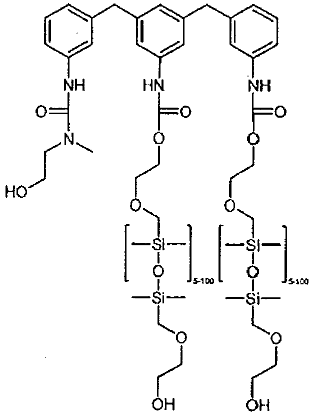 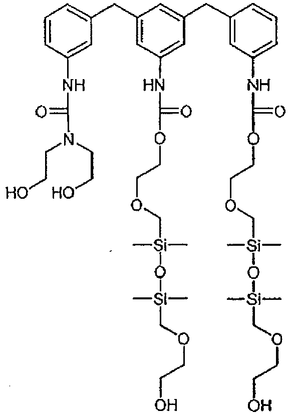 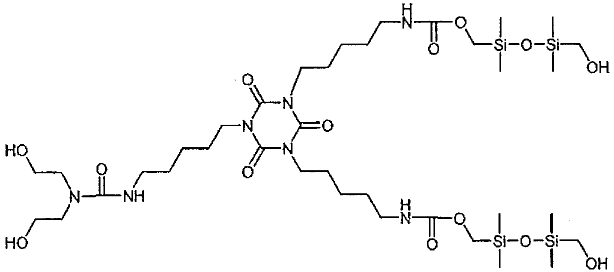 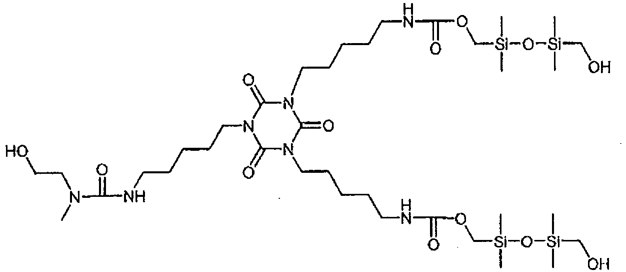 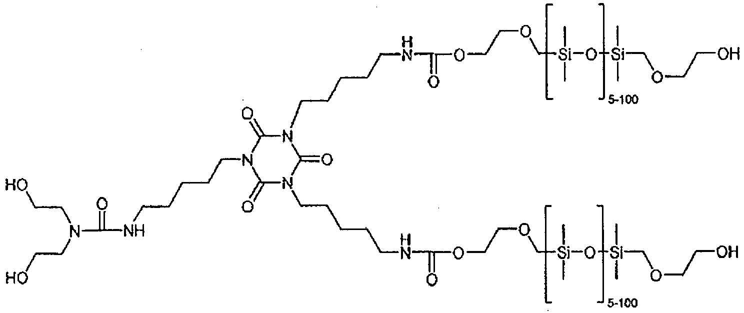 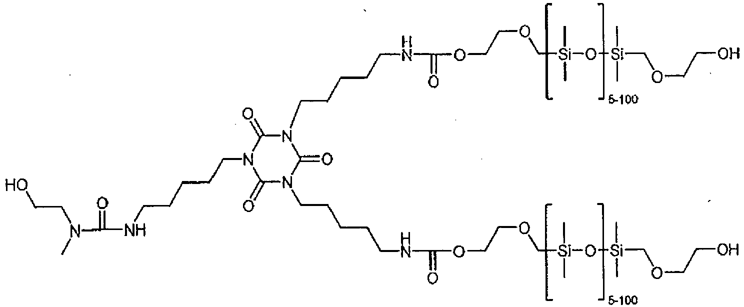 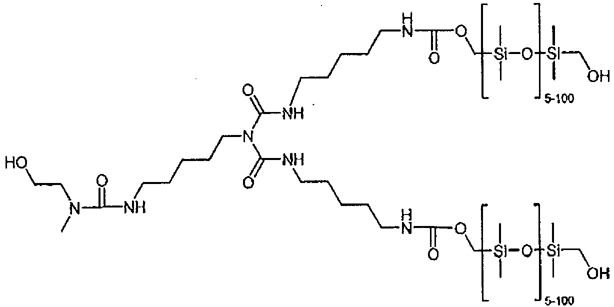 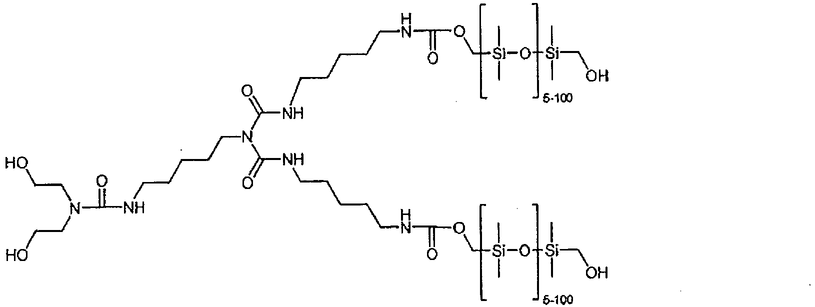 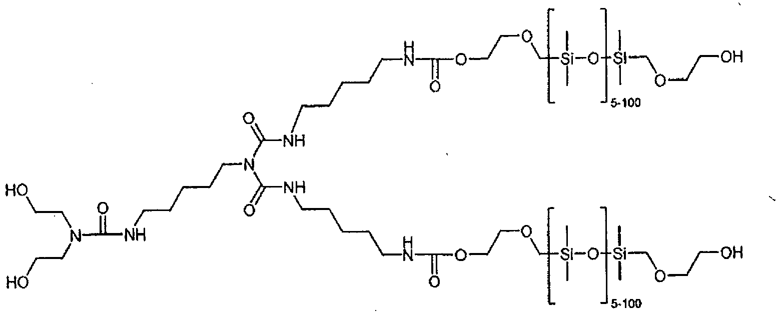 **und**

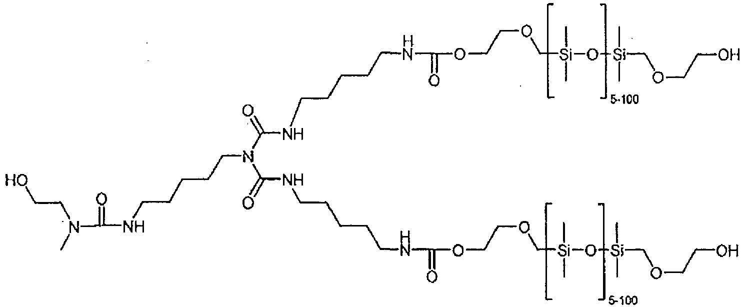

Bevorzugt handelt es sich bei den erfindungsgemäß eingesetzten Siloxanen (A) um: 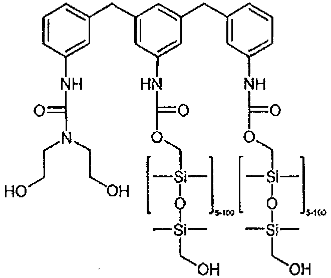 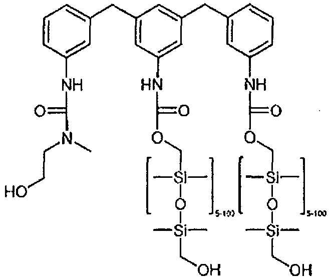 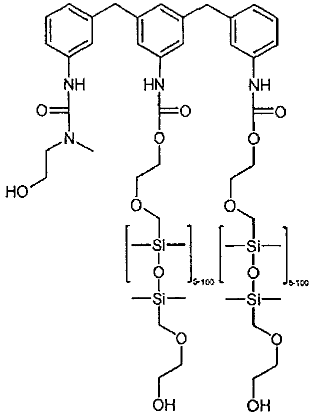 und

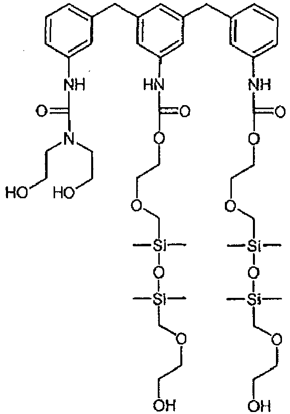

Besonders bevorzugt handelt es sich bei den erfindungsgemäß eingesetzten Siloxanen (A) um: 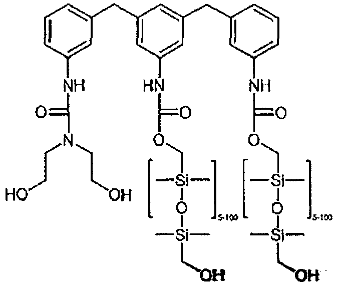 **und**

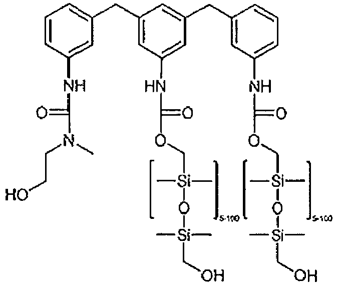

Die erfindungsgemäß eingesetzten Siloxane (A) können nach in der Siliciumchemie gängigen Verfahren hergestellt werden.

Bevorzugt handelt es sich bei den erfindungsgemäß eingesetzten Siloxanen (A) um solche herstellbar durch Umsetzung von
(i) linearen α,ω-aminoorganylfunktionalisierten oder α,ω-hydroxyorganylfunktionalisierten Siloxanen mit
(ii) Polyisocyanaten und
(iii) Aminen.

Bei Komponente (i) handelt es sich bevorzugt um Siloxane der Formel

HR¹R⁴ [SiR₂O] ₐ-SiR₂R⁴R¹H (II),

wobei R, R¹, R⁴ und a jeweils eine der oben dafür angegebenen Bedeutungen haben.

Beispiele für Komponente (i) sind

HOCH₂- [SiMe₂O]₂₋₁₀₀-SiMe₂CH₂OH,

HOCH₂-CH₂-OCH₂- [SiMe₂O] ₂₋₁₀₀-SiMe₂CH₂O-CH₂-CH₂OH,

H₂NCH₂- [SiMe₂O] ₂₋₁₀₀-SiMe₂CH₂NH₂,

H₂NCH₂-CH₂-CH₂- [SiMe₂O]₂₋₁₀₀-SiMe₂CH₂-CH₂-CH₂NH₂ und

H₃C-HNCH₂-CH₂-CH₂- [SiMe₂O]₂₋₁₀₀-SiMe₂CH₂-CH₂-CH₂NH-CH₃,

wobei Me gleich Methylrest ist. In den vorgenannten linearen **Siloxane können herstellungsbedingt bis zu 0,1% aller Einhei**ten Verzweigungen aufweisen, wie etwa in MeSiO_{3/2}- oder SiO_{4/2}-Einheiten.

Bevorzugt handelt es sich bei Komponente (i) um

HOCH₂- [SiMe₂O]₂₋₁₀₀-SiMe₂CH₂OH und

HOCH₂-CH₂-OCH₂- [SiMe₂O]₂₋₁₀₀-SiMe₂CH₂O-CH₂CH₂OH,

wobei HOCH₂-[SiMe₂O]₂₋₁₀₀-SiMe₂CH₂OH besonders bevorzugt ist.

Bei den Siloxanen (i) handelt es sich um handelsübliche Produkte bzw. können nach in der Siliciumchemie gängigen Methoden hergestellt werden.

Bei den erfindungsgemäß eingesetzten Polyisocyanaten (ii) handelt es sich um sämtliche bekannte Di- oder Polyisocyanate.

Bevorzugt werden als Polyisocyanate (ii) solche der allgemeinen Formel

V(NCO)ₚ (III)

eingesetzt, wobei
V und p jeweils eine der obengenannten Bedeutungen haben.

Beispiele für Polyisocyanate (ii) sind Diisocyanatodiphenylmethan (MDI), sowohl in Form von rohem oder technischem MDI als auch in Form reiner 4,4'- bzw. 2,4'-Isomeren oder deren Zubereitungen, Tolylendiisocyanat (TDI) in Form seiner verschiedenen Regioisomeren, Diisocyanatonaphthalin (MDI) Isophorondiisocyanat (IPDI), 1,3-Bis (1-isocyanato-1-methylethyl)benzene (TMXDI) oder auch von Hexamethylendiisocyanat (HDI), sowie polymeres MDI (p-MDI), Triphenylmethantriisocyanat oder Biuret- oder Isocyanurattrimerisate der oben genannten Isocyanate. Polyisocyanate (ii) werden in Mengen von bevorzugt 0,1 bis 30 Gewichtsteilen, besonders bevorzugt 0,1 bis 20 Gewichtsteilen, insbesondere 1 bis 10 Gewichtsteilen, jeweils bezogen auf 100 Gewichtsteile Siloxan (i), eingesetzt.

Bei den erfindungsgemäß eingesetzten Aminen (iii) handelt es sich bevorzugt um solche der Formel

HNR⁵₂ (IV),

wobei R⁵ eine der obengenannten Bedeutungen hat und bevorzugt maximal ein Rest R⁵ die Bedeutung von Wasserstoffatom hat, sowie um aliphatische cyclische Amine und aromatische cyclische Amine, die zusätzliche funktionelle Gruppen wie Thiol-, Hydroxyl- oder weitere Aminogruppen aufweisen können.

Beispiele für Amine (iii) sind Dimethylamin, Diethylamin, Butylamin, Dibutylamin, Diisopropylamin, Pentylamin, Cyclohexylamin, N-Methylcyclohexylamin, Anilin, Morpholin, Pyrrolidin, Piperidin, Imidazol, Piperazin, Ethylendiamin, N,N'-Dimethylethylendiamin, Ethanolamin, N-Methylethanolamin, Diethanolamin, Propanolamin, Alaniol, N-Methyl(thioethanol)amin.

Bevorzugt handelt es sich bei den Aminen (iii) um aliphatische Amine, besonders bevorzugt um Pyrrolidin, Diethanolamin, Ethanolamin und N-Methylethanolamin, insbesondere um Diethanolamin, Ethanolamin und N-Methylethanolamin.

Erfindungsgemäß werden Amine (iii) in Mengen von bevorzugt 0,1 bis 20 Gewichtsteilen, besonders bevorzugt 0,1 bis 10 Gewichtsteilen, insbesondere 0,5 bis 5 Gewichtsteilen, jeweils bezogen auf 100 Gewichtsteile Siloxan (i), eingesetzt.

Bei der Umsetzung der Edukte (i), (ii) und (iii) werden bevorzugt organische Lösungsmittel (iv) und Katalysatoren (v) eingesetzt.

Beispiele für organische Lösungsmittel (iv) sind Ether, insbesondere aliphatische Ether, wie Dimethylether, Diethylether, Methyl-t-butylether, Diisopropylether, Dioxan oder Tetrahydrofuran, Ester, insbesondere aliphatische Ester, wie Ethylacetat oder Butylacetat, Ketone, insbesondere aliphatische Ketone, wie Aceton oder Methylethylketon, sterisch gehinderte Alkohole, insbesondere aliphatische Alkohole, wie t-Butanol, Amide wie DMF, aliphatische Nitrile wie Acetonitril, aromatische Kohlenwasserstoffe wie Toluol oder Xylol, aliphatische Kohlenwasserstoffe wie Pentan, Cyclopentan, Hexan, Cyclohexan, Heptan, Chlorkohlenwasserstoffe wie Methylenchlorid oder Chloroform.

Bevorzugt handelt es sich bei den organischen Lösungsmitteln (iv) um aliphatische Ether, aliphatische Ketone oder aliphatische Nitrile, wobei aliphatische Ketone besonders bevorzugt sind.

Falls organische Lösungsmittel (iv) eingesetzt werden, handelt es sich um Mengen von bevorzugt 1 bis 1000 Gewichtsteilen, besonders bevorzugt 10 bis 500 Gewichtsteilen, insbesondere 30 bis 200 Gewichtsteilen, jeweils bezogen auf 100 Gewichtsteile Siloxan (i). Bei der Umsetzung werden bevorzugt Lösungsmittel (iv) eingesetzt.

Beispiele für Katalysatoren (v) sind Zinnverbindungen, wie Dibutylzinndilaurat, Dioctylzinndilaurat, Dibutylzinndiacetat, Dibutylzinndioctoat, Dibutylzinn-bis-(dodecylmercaptid), Zinn-(II)-(2-ethylhexanoat) und Zinkverbindungen, wie Zink-(II)-(2-**ethylhexanoat) und Bismutverbindungen, wie Bismut(III)-neodeca**noat und Zirconiumverbindungen, wie Zirconium-tetrakis(2,2,6,6-tetramethyl-heptane-3,5-dionate) und Amine, wie 1,4-Diazabicyclo [2, 2, 2] octan und Tetramethylguanidin.

Bevorzugt handelt es sich bei den Katalysatoren (v) um Zinn-, Zirconium- oder Bismutverbindungen, wobei Bismutverbindungen besonders bevorzugt sind.

Falls Katalysatoren (v) eingesetzt werden, handelt es sich um Mengen von bevorzugt 1 bis 1000 Gew.-ppm, besonders bevorzugt 10 bis 500 Gew.-ppm, insbesondere 50 bis 150 Gew.-ppm, jeweils bezogen auf das Gesamtgewicht des Reaktionsgemischs. Bei der erfindungsgemäßen Umsetzung werden bevorzugt Katalysatoren (v) eingesetzt.

Bei den zur Umsetzung eingesetzten Komponenten kann es sich jeweils um eine Art einer solchen Komponente wie auch um ein Gemisch aus mindestens zwei Arten einer jeweiligen Komponente handeln.

Bei der Umsetzung werden bevorzugt in einer ersten Stufe Siloxane (i) mit Polyisocyanaten (ii) gegebenenfalls in Anwesenheit von Lösungsmittel (iv) und gegebenenfalls in Anwesenheit von Katalysator (v) reagieren gelassen und das so erhaltene Reaktionsgemisch in einer zweiten Stufe mit Aminen (iii) umgesetzt.

Die Umsetzung wird bei Temperaturen von bevorzugt 20 bis 100°C, besonders bevorzugt 30 bis 80°C, durchgeführt.

Die Umsetzung wird bevorzugt beim Druck der umgebenden Atmosphäre, also 900 bis 1100 hPa, durchgeführt. Sie kann aber auch bei höheren Drücken, wie etwa bei 1200 bis 10 000 hPa, durchge**führt werden.**

Die Umsetzung wird bevorzugt unter Inertgasatinosphäre, wie z.B. Stickstoff und Argon, durchgeführt.

Das nach Beendigung der Umsetzung erhaltene Reaktionsgemisch kann nach beliebigen und bisher bekannten Verfahren aufgearbeitet werden. Bevorzugt wird dabei das gegebenenfalls eingesetzte organische Lösungsmittel entfernt, was besonders bevorzugt destillativ und - im Rahmen der technischen Möglichkeiten - vollständig erfolgt. Das Reaktionsgemisch enthält bevorzugt keine Edukte mehr. Falls das Reaktionsgemisch noch nicht abreagierte Edukte enthält, verbleiben diese bevorzugt dort.

Als erfindungsgemäß eingesetzte Isocyanate (B) können sämtliche bekannten Di- oder Polyisocyanate eingesetzt werden. Zum Beispiel kann es sich bei (B) um die oben unter (ii) aufgeführten Isocyanate handeln, insbesondere wenn es sich um ein zweistufiges Herstellungsverfahren handelt.

Bevorzugt werden als Polyisocyanate (B) solche der allgemeinen Formel

Q(NCO)_{b} (V)

eingesetzt, wobei
Q einen b-funktionellen, gegebenenfalls substituierten Kohlenwasserstoffrest und
b eine ganze Zahl von mindestens 2, bevorzugt von 2 bis 10, besonders bevorzugt 2 oder 4, insbesondere 2 bis 3, bedeutet.

Vorzugsweise handelt es sich bei Q um gegebenenfalls substituierte Kohlenwasserstoffreste mit 4 bis 30 Kohlenstoffatomen, besonders bevorzugt um Kohlenwasserstoffreste mit 6 bis 25 Kohlenstoffatomen.

Besonders bevorzugt handelt es sich bei den erfindungsgemäß eingesetzten Polyisocyanaten (B) um polymeres MDI der Formel 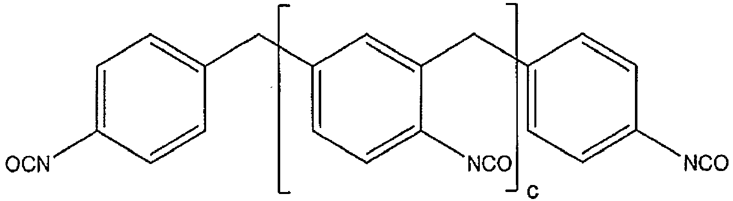 mit c gleich 0 bis 8. Polymeres MDI wird z.B. bei der Produktion von Diphenylmethandiisocyanat erhalten und ist im Allgemeinen ein Gemisch aus difunktionellem MDI und verschiedenen höhermolekularen MDI-Oligomeren mit einer höheren Funktionalität.

Die erfindungsgemäßen Zubereitungen enthalten Isocyanate (B) in Mengen von bevorzugt 0,1 bis 500 Gewichtsteilen, besonders bevorzugt 1 bis 250 Gewichtsteilen, insbesondere 10 bis 150 Gewichtsteilen, jeweils bezogen auf 100 Gewichtsteile Siloxan (A).

Zusätzlich zu den Siloxanen (A), Polyisocyanaten (B) und Trimerisierungskatalysatoren (G) können die erfindungsgemäßen Zubereitungen weitere Stoffe enthalten, wie z.B. Füllstoffe (C), Emulgatoren (D), physikalische Treibmittel (E), Katalysatoren, welche die Schaumbildung beschleunigen, (F), chemische Treibmittel (H) und Additive (I).

Falls Füllstoffe (C) eingesetzt werden, kann es sich um sämtliche nicht verstärkende Füllstoffe, also Füllstoffe mit einer BET-Oberfläche von bis zu 50 m²/g, wie Kreide, oder verstärken**de Füllstoffe, also Füllstoffe mit einer BET-Oberfläche von** mindestens 50 m²/g, wie Ruß, MQ-Harze, gefällte Kieselsäure oder pyrogene Kieselsäure, handeln. Insbesondere hydrophobe wie auch hydrophile pyrogene Kieselsäuren stellen dabei einen bevorzugten Füllstoff dar. In einer besonders bevorzugten Ausführungsform der Erfindung wird eine hydrophobe pyrogene Kieselsäure eingesetzt, deren Oberfläche mit Trimethylsilylgruppen modifiziert worden ist. Die eingesetzten Füllstoffe (C) - insbesondere pyrogene Kieselsäuren - können dabei verschiedene Punktionen wahrnehmen. So können sie zur Einstellung der Viskosität der verschäumbaren Mischung verwendet werden. Vor allem aber können sie während der Verschäumung eine "Stützfunktion" wahrnehmen und so zu Schäumen mit besserer Schaumstruktur führen. Schließlich können auch die mechanischen Eigenschaften der resultierenden Schäume durch den Einsatz von Füllstoffen (C) - insbesondere durch den Einsatz von pyrogener Kieselsäure - entscheidend verbessert werden.

Falls die erfindungsgemäßen Zubereitungen Füllstoffe (C) enthalten, handelt es sich um Mengen von bevorzugt 0,1 bis 30 Gewichtsteilen, besonders bevorzugt 0,1 bis 20 Gewichtsteilen, insbesondere 0,1 bis 15 Gewichtsteilen, jeweils bezogen auf 100 Gewichtsteile Siloxan (A). Die erfindungsgemäßen Zubereitungen enthalten bevorzugt Füllstoffe (C).

In vielen Fällen ist es von Vorteil, den schäumbaren Zubereitungen Emulgatoren (D) zuzugeben. Als geeignete Emulgatoren (D), die auch als Schaumstabilisatoren dienen, können beispielsweise alle handelsüblichen durch Polyetherseitenketten modifizierten Siliconoligomere eingesetzt werden, die auch zur Herstellung von herkömmlichen Polyurethanschäumen eingesetzt werden.

Falls Emulgatoren (D) eingesetzt werden, handelt es sich um Mengen von bevorzugt bis zu 6 Gew.-%, besonders bevorzugt von 0,3 bis 3 Gew.-%, jeweils bezogen auf das Gesamtgewicht der schäumbaren Zubereitungen. Die erfindungsgemäßen Zubereitungen enthalten bevorzugt keine Emulgatoren (D).

Die erfindungsgemäßen Zubereitungen können auch Verbindungen (E) enthalten, die als physikalische Treibmittel dienen können. Als Bestandteil (E) werden bevorzugt niedermolekulare Kohlenwasserstoffe wie z.B. n-Propan, n-Butan, n-Pentan oder Cyclopentan, Dimethylether, fluorierte Kohlenwasserstoffe wie 1,1-Difluorethan oder 1,1,1,2-Tetrafluorethan oder CO₂ verwendet. Die Schaumherstellung kann dabei gegebenenfalls ausschließlich durch die physikalischen Treibmittel (E) erfolgen. Meist allerdings erfolgt die Schaumbildung durch eine zusätzliche Reaktion der isocyanatfunktionellen Komponenten in der erfindungsgemäßen Zubereitung mit der Komponente (H) als chemischem Treibmittel. Dadurch kann die Menge des benötigten physikalischer Treibmittels (E) reduziert werden, um zu Schäumen mit geringerer Dichte zu gelangen.

Besonders bevorzugt handelt es sich bei Komponente (E) um niedermolekulare Kohlenwasserstoffe, insbesondere um n-Pentan.

Falls die erfindungsgemäßen Zubereitungen Bestandteil (E) enthalten, handelt es sich um Mengen von bevorzugt 0,1 bis 30 Gewichtsteilen, besonders bevorzugt 0,1 bis 20 Gewichtsteilen, insbesondere 0,1 bis 15 Gewichtsteilen, jeweils bezogen auf 100 Gewichtsteile Siloxan (A). Die erfindungsgemäßen Zubereitungen enthalten bevorzugt physikalisches Treibmittel (E).

Ferner können die erfindungsgemäßen schäumbaren Zubereitungen **weitere Katalysatoren (F) enthalten, welche die Schaumbildung** mit dem chemischen Treibmittel (H) beschleunigen. Als Katalysatoren (F) sind u.a. Organozinnverbindungen geeignet. Beispiele sind Dibutylzinndilaurat, Dioctylzinndilaurat, Dibutylzinndiacetat, Dibutylzinndioctoat oder Dibutylzinn-bis-(dodecylmercaptid). Zudem kommen auch zinnfreie Katalysatoren (F) z.B. Schwermetallverbindungen oder Amine in Frage. Als Beispiel für zinnfreie Katalysatoren sei Eisen(III) -acetylacetonat, Zink(II)-octoat, Zirkonium(IV)-acetylacetonat, Bismut(III)-neo-decanoat genannt. Beispiele für Amine sind Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenylamin, Bis-N,N-dimethylaminoethylether, N,N-Dimethyl-2-aminoethanol, N,N-Dimethylaminopyridin, N,N,N',N",N"-Pentamethyl-diethylen-triamin 1,5-Diazabicyclo[4.3.0]non-5-en, 1,8-Diazabicyclo[5.4.0]undec-7-en, N-Ethylmorpholin oder N,N'-Dimethylaminopyridin.

Bevorzugt handelt es sich bei Katalysator (F) um Amine, besonders bevorzugt um N,N,N',N",N"-Pentamethyl-diethylen-triamin.

Die Katalysatoren (F) können einzeln oder als Gemisch eingesetzt werden. Gegebenenfalls können die bei der Herstellung der Siloxane (A) eingesetzten Katalysatoren gleichzeitig auch als Katalysatoren (F) zur Schaumbildung dienen.

Falls Katalysator (F) eingesetzt wird, handelt es sich um Mengen von bevorzugt 0,1 bis 6,0 Gew.-%, besonders bevorzugt von 0,3 bis 4,0 Gew.-%, jeweils bezogen auf das Gesamtgewicht der erfindungsgemäßen verschäumbaren Zubereitung. Die erfindungsgemäßen Zubereitungen enthalten bevorzugt Katalysatoren (F), wenn chemische Treibmittel (H) eingesetzt werden.

Die erfindungsgemäßen schäumbaren Zubereitungen enthalten Trimerisierungkatalysatoren (G), welche die Trimerisierung von Isocyanatgruppen zu Isocyanuratgruppen initiieren und beschleunigen.

Beispiele für Trimerisierungskatalysatoren (G) sind Ammonium, Alkali- oder Erdalkalimetallsalze von Carbonsäuresalze, wie etwa Kaliumformiat, Kaliumacetat, Kalium(2-ethylhexanoat), Ammoniumformiat, Ammoniumacetat, Ammonium(2-ethylhexanoat), [1-(N,N,N-Trimethylammonium)propan-2-ol]formiat und [1-(N,N,N-Trimethylammonium)propan-2-ol] (2-ethylhexanoat).

Vorzugsweise werden als Komponente (G) Salze von Carbonsäuren, besonders bevorzugt Salze von Carbonsäuren mit 1 bis 20 Kohlenstoffatomen eingesetzt. Dabei kann es sich um lineare oder verzweigte, substituierte oder unsubstiutierte, gesättigte oder ungesättigte aliphatische oder aromatische Carbonsäuren handeln.

Falls es sich bei Trimerisierungskatalysator (G) um Carbonsäuresalze handelt, sind Kaliumsalze von Carbonsäuren bevorzugt, insbesondere Kalium(2-ethylhexanoat).

Die Trimersisierungskatalysatoren (G) können einzeln oder als Gemisch eingesetzt werden. Gegebenenfalls können sie im Gemisch mit einem oder mehreren Katalysatoren (F) eingesetzt werden.

Trimerisierungskatalysator (G) wird in Mengen von bevorzugt 0,1 bis 10,0 Gew.-%, besonders bevorzugt von 0,3 bis 6,0 Gew.-%, jeweils bezogen auf das Gesamtgewicht der erfindungsgemäßen verschäumbaren Zubereitung, eingesetzt.

Als chemische Treibmittel (H) können prinzipiell sowohl Wasser wie auch sämtliche Verbindungen mit bevorzugt mindestens einer gegenüber Isocyanat reaktiven Funktion dienen.

Beispiele für Bestandteil (H) sind aminoalkyl- oder hydroxyfunktionelle Siloxane, die unterschiedlich sind zu Komponente (A), monomere Alkohole, monomere Diole, wie Glycol, Propandiol und Butandiol, monomere Oligoole, wie Pentaerythrit oder Trihydroxymethylethan, oligomere oder polymere Alkohole mit einer, zwei oder mehreren Hydroxylgruppen, wie Etylen- oder Propylenglykole, Wasser, monomere Amine mit einer, zwei oder mehreren Aminfunktionen, wie Etylendiamin und Hexamethylendiamin, sowie auch oligomere oder polymere Amine mit einer, zwei oder mehreren Aminfunktionen.

Falls Bestandteil (H) eingesetzt wird, handelt es sich bevorzugt um Hydroxyverbindungen, wobei Wasser besonders bevorzugt ist.

Bei Bestandteil (H) gleich Wasser kann es sich um alle Arten von Wasser, wie z.B. natürliche Wässer und chemische Wässer, handeln, wobei Wasser (H) flüssig oder gasförmig sein kann einschließlich Luftfeuchtigkeit.

Falls Bestandteil (H) eingesetzt wird, handelt es sich um Mengen von bevorzugt 0,1 bis 20 Gewichtsteilen, besonders bevorzugt von 0,1 bis 15 Gewichtsteilen, insbesondere von 0,1 bis 10 Gewichtsteilen, jeweils bezogen auf 100 Gewichtsteile Siloxan (A). Vorzugsweise enthalten die erfindungsgemäßen Zusammensetzungen Bestandteil (H).

Weiterhin können als Additive (I) alle Zusatzstoffe eingesetzt werden, die auch bisher in verschäumbaren Zusammensetzungen eingesetzt worden sind. Beispiele für Additive (I) sind Zellregulantien, Thixotropiermittel, Weichmacher, Farbstoffe. Zur Verbesserung der Brandbeständigkeit können den schäumbaren Zubereitungen zudem Flammschutzmittel zugesetzt werden, z.B. phosphorhaltige Verbindungen, vor allem Phosphate und Phosphonate, sowie auch halogenierte Polyester und Polyole oder Chlorparaffine. Ferner können auch nicht flüchtige Flammschutzmittel wie Melamin oder expandierbarer Graphit (Blähgraphit) zugesetzt werden, welches sich unter Flammeinwirkung stark ausdehnt und dabei die Oberfläche vor weiterer Hitzeeinwirkung versiegelt.

Falls Additive (I) eingesetzt werden, handelt es sich um Mengen von bevorzugt 0,1 bis 30 Gewichtsteilen, besonders bevorzugt von 0,1 bis 20 Gewichtsteilen, insbesondere von 0,1 bis 15 Gewichtsteilen, jeweils bezogen auf 100 Gewichtsteile Siloxan (A). Die erfindungsgemäßen Zubereitungen enthalten bevorzugt Additive (I).

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Zubereitungen um solche enthaltend
(A) Siloxane gemäß Formel (I),
(B) Polyisocyanate,
   gegebenenfalls
(C) Füllstoffe,
   gegebenenfalls
(D) Emulgatoren,
   gegebenenfalls
**(E) physikalische Treibmittel,**
   gegebenenfalls
(F) Katalysatoren, welche die Schaumbildung beschleunigen,
(G) Trimerisierungskatalysatoren,
   gegebenenfalls
(H) chemische Treibmittel und
   gegebenenfalls
(I) Additive,
   wobei die erfindungsgemäßen Zubereitungen mindestens drei Isocyanatgruppen aufweisen sowie mindestens ein Treibmittel, ausgewählt aus Komponenten (E) und (H), enthalten, bevorzugt mindestens (E), insbesondere (E) in Kombination mit (H).

Die erfindungsgemäßen Zubereitungen enthalten außer den Komponenten (A) bis (I) bevorzugt keine weiteren Bestandteile.

Die erfindungsgemäßen Zubereitungen können nun nach beliebigen und an sich bekannten Verfahren, wie einfaches Vermischen der einzelnen Komponenten, hergestellt werden, wobei auch Vormischungen einzelner Bestandteile hergestellt werden können. Dabei können 1-komponentige Systeme wie auch 2-komponentige Systeme hergestellt werden.

Werden die erfindungsgemäßen Zubereitungen in Form von 2-komponentigen Systemen bereitgestellt, was bevorzugt ist, so können die beiden Komponenten der erfindungsgemäßen verschäumbaren Zubereitung alle Bestandteile in beliebigen Kombinationen und Mengenverhältnissen enthalten, mit der Maßgabe, dass eine Komponente nicht gleichzeitig isocyanatfunktionelle Komponenten und Trimerisierungskatalysator (G) sowie chemische Treibmittel (H) enthält.

So wird z.B. zur Herstellung der erfindungsgemäßen Zubereitung **bevorzugt eine Mischung enthaltend Bestandteil (A), Bestandteil** (B), gegebenenfalls Bestandteil (C), gegebenenfalls Bestandteil (D), gegebenenfalls Bestandteil (E) und gegebenenfalls Bestandteil (I) als Komponente 1 zubereitet sowie eine Komponente 2 enthaltend Bestandteil (G), gegebenenfalls Bestandteil (F) und gegebenenfalls Bestandteil (H), die dann zur Herstellung des erfindungsgemäßen Schaumes miteinander vermischt werden.

Es können jedoch auch zur Herstellung der erfindungsgemäßen Zubereitung alle Bestandteile in einem Schritt miteinander vermischt werden, was technisch schlecht realisierbar und daher nicht bevorzugt ist.

Die erfindungsgemäßen Zubereitungen sind bevorzugt flüssig-bis zähviskos und haben eine Viskosität von bevorzugt 250 bis 10 000 mPas, besonders bevorzugt 500 bis 5 000 mPas, jeweils bei 25°C und gemessen gemäß ASTM D 4283.

Die erfindungsgemäßen Zubereitungen dienen bevorzugt zur Herstellung von Schäumen, besonders bevorzugt von Hartschäumen.

Ein weiterer Gegenstand der vorliegenden Erfindung ist ein Verfahren zur Herstellung siliconhaltiger Polyisocyanuratschäume, dadurch gekennzeichnet, dass Siloxan (A), Polyisocyanat (B) und Trimerisierungskatalysator (G) sowie mindestens ein Treibmittel vermischt und im direkten Anschluss daran reagieren gelassen werden.

In einer bevorzugten Ausführungsform des erfindungsgemäßen Verfahrens werden Siloxan (A), Polyisocyanat (B), physikalisches Treibmittel (E), Katalysator (F), Trimerisierungskatalysator (G) sowie gegebenenfalls (C), gegebenenfalls chemisches Treibmittel (H) und gegebenenfalls (I) vermischt und im direkten **Anschluss daran reagieren gelassen.**

In einer besonders bevorzugten Ausführungsform des erfindungsgemäßen Verfahrens werden zunächst Siloxan (A), Polyisocyanat (B), physikalisches Treibmittel (E), gegebenenfalls Füllstoff (C) und gegebenenfalls Additive (I) vorgemischt und anschließend mit einer Mischung bestehend aus Katalysator (F), Trimerisierungskatalysator (G), chemisches Treibmittel (H) sowie gegebenenfalls Additive (I) vermengt und im direkten Anschluss daran reagieren gelassen.

Das erfindungsgemäße Verfahren wird bei Starttemperaturen von bevorzugt 0 bis 100°C, besonders bevorzugt 10 bis 80°C, insbesondere 15 bis 60°C, durchgeführt. Die bei der Reaktion entstehende Wärme bleibt bevorzugt im System und trägt zur Schaumbildung bei. Bei dem erfindungsgemäßen Verfahren werden Reaktionstemperaturen bis zu bevorzugt 50 bis 150°C erreicht.

Das erfindungsgemäße Verfahren wird bevorzugt beim Druck der umgebenden Atmosphäre, also etwa 900 bis 1100 hPa, durchgeführt.

Bei dem erfindungsgemäßen Verfahren werden bevorzugt gasförmige Komponenten, wie z.B. CO₂ und gasförmiges Pentan, freigesetzt, die größtenteils für den Aufbau der erfindungsgemäßen Schaumstruktur verantwortlich sind.

In einer besonderen Ausführungsform des erfindungsgemäßen Verfahrens kann die verschäumbare Zusammensetzung in eine Form gegeben werden, die anschließend so verschlossen wird, dass der bei der Schaumbildung entstehende Überdruck entweichen kann. Dies kann z.B. dadurch realisiert werden, dass die Form ein Überdruckventil aufweist oder kleine Öffnungen, also beispielsweise über einen oder mehrere schmale Spalte unvollständig verschlossen ist.

Bei den Formen, die in der besonderen Ausführungsform des erfindungsgemäßen Verfahrens verwendet werden können, kann es sich um alle Arten von Formen handeln, die auch bisher zur Herstellung von Formschäumen verwendet worden sind. Beispiele für solche Formen sind verschließbare und beheizbare Metallformen, die zum Entweichen der verdrängten Luft während des Schäumprozesses mit einem Überdruckventil versehen sind.

Bevorzugt handelt es sich bei den für diese besondere Ausführungsform des erfindungsgemäßen Verfahrens eingesetzten Formen um beheizbare Formen aus einem festen Werkstoff, wie z.B. glasfaserverstärkte Polyester- oder Epoxidharze sowie Metalle, wie Stahl oder Aluminium, wobei Formen aus Stahl und Aluminium bevorzugt mit einer Grundierungspaste, vorzugsweise einmalig vor Gebrauch, hydrophobiert werden.

Beispiele für Grundierungspasten, mit denen die, in dieser besonderen Ausführungsform, eingesetzten Formen hydrophobiert werden können, sind hochschmelzende Wachse auf der Basis von Kohlenwasserstoffen, wie sie beispielsweise bei der Firma Chem-Trend Deutschland GmbH, D-Maisach käuflich unter dem Handelsnamen Klüberpur 55-0005 erhältlich sind.

Falls erwünscht, können die Formen zur besseren Entformbarkeit der hergestellten Schaumkörper mit einem Trennmittel benetzt werden.

Beispiele für solche Trennmittel sind in Kohlenwasserstoffe gelöste hochschmelzende Wachse, wie sie etwa bei der Firma Chem-Trend Deutschland GmbH, D-Maisach käuflich unter dem Handelsnamen Klüberpur 41-0057 erhältlich sind.

Bei dieser besonderen Ausführungsform des Verfahrens werden die eingesetzten Formen bevorzugt ohne Trennmittel eingesetzt.

Die in dieser besonderen Ausführungsform des Verfahrens eingesetzten Formen werden auf Temperaturen von bevorzugt 0 bis 150°C, besonders bevorzugt 10 bis 100°C, insbesondere 40 bis 80°C, eingestellt.

Bei der besonderen Ausführungsform des Verfahrens wird die Expansion des Schaums bei dessen Bildung durch die eingesetzte Form begrenzt, d.h. die Form wird "überpackt". Diese Überpackung beträgt typischerweise bevorzugt zwischen 20 Vol.-% und 100 Vol.-%. Typische Füllgrade bei einer Zielschaumdichte von 50 kg/m³ betragen dabei bevorzugt 5 Vol.-%.

Ein weiterer Gegenstand der Erfindung sind Schäume, herstellbar durch Umsetzung von Siloxanen (A), Polyisocyanat (B) und Trimerisierungskatalysator (G) mit mindestens einem Treibmittel.

Die erfindungsgemäßen Schäume weisen zusätzlich zu Urethanauch Isocyanuratstrukturen auf.

Die erfindungsgemäßen Schäume zeichnen sich durch eine feine, geschlossenzellige Schaumstruktur aus, haben ausgezeichnete mechanische Eigenschaften und sind formstabil und nicht flexibel.

Die erfindungsgemäßen Schäume weisen eine Dichte von bevorzugt 10 bis 500 kg/m³, besonders bevorzugt 15 bis 300 kg/m³, insbesondere 20 bis 200 kg/m³, auf, jeweils bestimmt bei 25°C und **1013. hPa.**

Die erfindungsgemäßen Schäume können überall dort eingesetzt werden, wo auch bisher Polyisocyanuratschäume eingesetzt worden sind. Insbesondere eignen sie sich für Wärme- und Geräuschisolierungen.

Die erfindungsgemäßen verschäumbaren Zubereitungen haben den Vorteil, dass sie auf sehr einfache Weise und mit den bisher bekannten Methoden aus der PU-Technologie verarbeitet werden können.

Die erfindungsgemäßen Zubereitungen haben den Vorteil, dass Silicon-Polyurethanschäume mit geringer Dichte nach dem One-Shot-Verfahren hergestellt werden können.

Die erfindungsgemäßen verschäumbaren Zubereitungen haben den Vorteil, dass vollständig geschlossenzellige Hartschäume mit Schaumdichten unterhalb von 50 kg·m-3 hergestellt werden können.

Des Weiteren haben die erfindungsgemäßen Zubereitungen den Vorteil, dass sie mit kommerziell leicht verfügbaren Edukten hergestellt werden können.

Ferner haben die erfindungsgemäßen Zubereitungen den Vorteil, dass sie leicht verarbeitbar sind und niedrigviskos hergestellt werden können.

Die erfindungsgemäßen Zubereitungen den Vorteil, dass Silicon-Polyisocyanurathartschäume mit geringen Dichte hergestellt werden können.

Das erfindungsgemäße Verfahren zur Herstellung von Polyisocyanuratschäumen hat den Vorteil, dass es einfach in der Durchführung ist.

Des Weiteren haben die erfindungsgemäßen Schäume den Vorteil, dass sie rigide und äußerst schwer entflammbar sind.

Die erfindungsgemäßen Schäume haben ferner den Vorteil, dass sie hohe mechanische Festigkeiten, insbesondere in Kombination mit geringen Schaumdichten, aufweisen.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

In den nachfolgenden Beispielen wurden folgende Einsatzstoffe verwendet:
**MDI 2,9:** polymeres MDI mit einer Funktionalität von 2,9 (käuflich erhältlich unter der Bezeichnung Suprasec^{®} 2085 bei Huntsman Polyurethanes, D-Deggendorf);
**MDI 2,2:** polymeres MDI mit einer Funktionalität von 2,2 (käuflich erhältlich unter der Bezeichnung Suprasec^{®} 2647 bei Huntsman Polyurethanes, D-Deggendorf);
**Aminkatalysator:** N,N,N',N'',N''-Pentamethyl-diethylen-triamin;
**Trimerisierungskatalysator:** Kalium(2-ethylhexanoat), 75 Gew.-**%ig in Diethylenglykol.**
**Blähgraphit:** Expandierbarer Graphit (käuflich erhältlich unter der Bezeichnung "EX-EF-80 SC" bei der Fa. NGS Naturgraphit GmbH, D-Leinburg).

### Vergleichsbeispiel 1

200,00 g eines linearen Organopolysiloxans der Formel HO-CH₂-[Si(CH₃)₂-O]₁₂Si(CH₃)₂-CH₂-OH und 20,8 g MDI 2,9 wurden unter Inertgasatmosphäre in 400 ml absolutem Aceton umgesetzt. Die Reaktion wurde mit 80 mg Bismut (III) -neodecanoat katalysiert und 1 Stunde bei 50°C gerührt. Nach beendeter Reaktion wurde das Reaktionsgemisch bei einem Druck von 10 hPa vom Lösungsmittel befreit. Es wurden 221 g eines gelblichen, hyperverzweigten Siloxans als Reinsubstanz erhalten.

Anschließend wurden 200 g dieses erhaltenen hyperverzweigten Siloxans zunächst mit 160 g MDI 2,2 und 30,0 g n-Pentan mittels eines schnelllaufenden KPG-Rührers zu einer homogenen Emulsion verarbeitet. Anschließend wurde ein Gemisch bestehend aus 1,0 g Wasser, 0,50 g Aminkatalysator und 4,2 g Trimerisierungskatalysator schnell zugegeben und wieder mittels eines schnelllaufenden KPG-Rührers zu einer homogenen Mischung emulgiert. Nach ca. 20 Sekunden setzte eine exotherme Reaktion mit Schaumentwicklung ein. Die Schaumbildung war nach weiteren ca. 120 Sekunden abgeschlossen. Es resultierte ein gelblicher, rigider Hartschaum mit einer Dichte von 50 kg/m³, der eine relativ grobe und offenporige Struktur aufwies.

### Beispiel 1

200,00 g eines linearen Organopolysiloxans der Formel HO-CH₂-[Si(CH₃)₂-O]₁₂Si(CH₃)₂-CH₂-OH und 23,6 g MDI 2,9 wurden unter einer Argonatmosphäre in 400 ml absolutem Aceton umgesetzt. Die Reaktion wurde mit 60 mg Bismut (III) -neodecanoat katalysiert **und bei. 50°C gerührt. Nach 1. Stunde Reaktionszeit wurden zu**nächst langsam 3,0 g Diethanolamin zugetropft und anschließend das so erhaltene Reaktionsgemisch bei einem Druck von 10 hPa vom Lösungsmittel befreit.

Anschließend wurden 200 g dieses erhaltenen hyperverzweigten Siloxans zunächst mit 185 g MDI 2,2 und 13,0 g n-Pentan mittels eines schnelllaufenden KPG-Rührers zu einer homogenen Emulsion verarbeitet. Anschließend wurde ein Gemisch bestehend aus 1,0 g Wasser, 0,50 g Aminkatalysator und 4,20 g Trimerisierungskatalysator schnell zugegeben und wieder mittels eines schnelllaufenden KPG-Rührers zu einer homogenen Mischung emulgiert. Nach ca. 10 Sekunden setzte eine exotherme Reaktion mit Schaumentwicklung ein. Die Schaumbildung war nach weiteren ca. 90 Sekunden abgeschlossen. Es resultierte ein gelblicher, rigider Hartschaum mit einer Dichte von 50 kg/m³, der eine sehr feine und geschlossenzellige Struktur aufwies.

### Beispiel 2

200,00 g eines linearen Organopolysiloxans der Formel HO-CH₂-[Si(CH₃)₂-O]₁₂Si(CH₃)₂-CH₂-OH und 23,6 g MDI 2,9 wurden unter einer Argonatmosphäre in 400 ml absolutem Aceton umgesetzt. Die Reaktion wurde mit 60 mg Bismut(III)-neodecanoat katalysiert und bei 50°C gerührt. Nach 1 Stunde Reaktionszeit wurden zunächst langsam 3,0 g Diethanolamin zugetropft und anschließend das so erhaltene Reaktionsgemisch bei einem Druck von 10 hPa vom Lösungsmittel befreit.

Anschließend wurden 200 g dieses erhaltenen hyperverzweigten Siloxans zunächst mit 185 g MDI 2,2 und 18,0 g n-Pentan mittels eines schnelllaufenden KPG-Rührers zu einer homogenen Emulsion verarbeitet. Anschließend wurde ein Gemisch bestehend aus 1,0 g Wasser, 0,50 g Aminkatalysator und 4,20 g Trimerisierungskata**lysator schnell zugegeben und wieder mittels eines schnelllau**fenden KPG-Rührers zu einer honogenen Mischung emulgiert. Nach ca. 10 Sekunden setzte eine exotherme Reaktion mit Schaumentwicklung ein. Die Schaumbildung war nach weiteren ca. 90 Sekunden abgeschlossen. Es resultierte ein gelblicher, rigider Hartschaum mit einer Dichte von 40 kg/m³, der eine sehr feine und geschlossenzellige Struktur aufwies.

### Beispiel 3

200,00 g eines linearen Organopolysiloxans der Formel HO-CH₂-[Si(CH₃)₂-O]₁₂Si(CH₃)₂-CH₂-OH und 23,6 g MDI 2,9 wurden unter einer Argonatmosphäre in 400 ml absolutem Aceton umgesetzt. Die Reaktion wurde mit 60 mg Bismut(III)-neodecanoat katalysiert und bei 50°C gerührt, Nach 1 Stunde Reaktionszeit wurden zunächst langsam 3,0 g Diethanolamin zugetropft und anschließend das so erhaltene Reaktionsgemisch bei einem Druck von 10 hPa vom Lösungsmittel befreit.

Anschließend wurden 200 g dieses erhaltenen hyperverzweigten Siloxans zunächst mit 185 g MDI 2,2, 10 g Blähgraphit und 18,0 g n-Pentan mittels eines schnelllaufenden KPG-Rührers zu einer homogenen Emulsion verarbeitet. Anschließend wurde ein Gemisch bestehend aus 1,0 g Wasser, 0,50 g Aminkatalysator und 4,20 g Trimerisierungskatalysator schnell zugegeben und wieder mittels eines schnelllaufenden KPG-Rührers zu einer homogenen Mischung emulgiert. Nach ca. 10 Sekunden setzte eine exotherme Reaktion mit Schaumentwicklung ein. Die Schaumbildung war nach weiteren ca. 90 Sekunden abgeschlossen, Es resultierte ein dunkelgrauer, rigider Hartschaum mit einer Dichte von 40 kg/m³, der eine sehr feine und geschlossenzellige Struktur aufwies.

## Patentansprüche

1. Verschäumbare Zusammensetzungen enthaltend
Siloxane
(A) der Formel
V-(NHC(O)R¹R²)ₚ₋ₘ₋ₙ(NHC(O)R¹R⁴[SiR₂O]ₐ-SiR₂R⁴R¹H)ₘ(NHC(O)NR⁵₂)ₙ (I),
worin
V einen p-wertigen Kohlenwasserstoffrest, der Heteroatome enthalten kann, bedeutet,
R gleich oder verschieden sein kann und einen einwertigen, gegebenenfalls substituierten Kohlenwasserstoffrest bedeutet,
R¹ gleich oder verschieden sein kann und -O-, -S- oder -NR³- bedeutet,
R² gleich oder verschieden sein kann und Wasserstoffatom und einwertige, gegebenenfalls substituierte Kohlenwasserstoffreste darstellt,
R³ gleich Wasserstoffatom oder einwertiger, gegebenenfalls substituierter Kohlenwasserstoffrest bedeutet,
R⁴ gleich oder verschieden sein kann und einen zweiwertigen, gegebenenfalls substituierten Kohlenwasserstoffrest bedeutet, der mit Heteroatomen unterbrochen sein kann,
R⁵ gleich oder verschieden sein kann und Wasserstoffatom oder einen gegebenenfalls substituierten Kohlenwasserstoffrest bedeutet,
a eine ganze Zahl größer oder gleich 1 bedeutet,
p eine ganze Zahl größer oder gleich 2,
m eine ganze Zahl größer oder gleich 1,
n eine ganze Zahl größer oder gleich 1,
mit der Maßgabe, dass p größer oder gleich m+n ist,
(B) Polyisocyanate und
(G) Trimerisierungskatalysatoren.

2. Verschäumbare Zusammensetzung gemäß Anspruch 1, **dadurch gekennzeichnet, dass** p gleich m+n ist.

3. Verschäumbare Zusammensetzung gemäß Anspruch 1 oder 2, **dadurch gekennzeichnet, dass** als Polyisocyanate (B) solche der allgemeinen Formel
Q(NCO)_{b} (V)
eingesetzt werden, wobei
Q einen b-funktionellen, gegebenenfalls substituierten Kohlenwasserstoffrest und
b eine ganze Zahl von mindestens 2 bedeutet.

4. Verschäumbare Zusammensetzung gemäß einem oder mehreren der Ansprüche 1 bis 3, **dadurch gekennzeichnet, dass** als Komponente (G) Salze von Carbonsäuren eingesetzt werden.

5. Verschäumbare Zusammensetzung gemäß einem oder mehreren der Ansprüche 1 bis 4, **dadurch gekennzeichnet, dass** Trimerisierungskatalysator (G) in Mengen von 0,1 bis 10,0 Gew.-%, bezogen auf das Gesamtgewicht der erfindungsgemäßen verschäumbaren Zubereitung, eingesetzt wird.

6. Verschäumbare Zusammensetzung gemäß einem oder mehreren der Ansprüche 1 bis 5, **dadurch gekennzeichnet, dass** es sich um solche handelt enthaltend
(A) Siloxane gemäß Formel (I),
(B) Polyisocyanate,
gegebenenfalls
(C) Füllstoffe,
gegebenenfalls
(D) Emulgatoren,
**gegebenenfalls**
(E) physikalische Treibmittel,
gegebenenfalls
(F) Katalysatoren, welche die Schaumbildung beschleunigen,
(G) Trimerisierungskatalysatoren,
gegebenenfalls
(H) chemische Treibmittel und
gegebenenfalls
(I) Additive,
wobei die erfindungsgemäßen zubereitungen mindestens drei Isocyanatgruppen aufweisen sowie mindestens ein Treibmittel, ausgewählt aus Komponenten (E) und (H), enthalten.

7. Verfahren zur Herstellung siliconhaltiger Polyisocyanuratschäume, dadurch gekenntzeichnet, dass Siloxan (A), Polyisocyanat (B) und Trimerisierungskatalysator (G) sowie mindestens ein Treibmittel vermischt und reagieren gelassen werden.

8. Schäume, herstellbar durch Umsetzung von Siloxanen (A), Polyisocyanat (B) und Trimerisierungskatalysator (G) mit mindestens einem Treibmittel.

## Claims

1. Foamable compositions containing siloxanes
(A) of the formula
V-(NHC(O)R¹R²)ₚ₋ₘ₋ₙ (NHC (O) R¹R⁴[SiR₂O]ₐ-SiR₂R⁴R¹H)ₘ(NHC(O)NR⁵₂)ₙ (I)
where
V is a p-valent hydrocarbon radical which may contain heteroatoms,
R in each occurrence can be the same or different and is a monovalent, optionally substituted hydrocarbon radical,
R¹ in each occurrence can be the same or different and is -O-, -S- or -NR³-,
R² in each occurrence can be the same or different and represents hydrogen atom and monovalent, optionally substituted hydrocarbon radicals,
R³ is hydrogen atom or monovalent, optionally substituted hydrocarbon radical,
R⁴ in each occurrence can be the same or different and is a divalent, optionally substituted hydrocarbon radical which can be interrupted by heteroatoms,
R⁵ in each occurrence can be the same or different and is hydrogen atom or an optionally substituted hydrocarbon radical,
a is an integer not less than 1,
p is an integer not less than 2,
m is an integer not less than 1,
n is an integer not less than 1,
with the proviso that p is not less than m+n,
(B) polyisocyanates, and
(G) trimerization catalysts.

2. Foamable composition according to Claim 1, **characterized in that** p is equal to m+n.

3. Foamable composition according to Claim 1 or 2, **characterized in that** the polyisocyanates (B) used have the general formula
Q(NCO)_{b} (V)
where
Q is a b-functional, optionally substituted hydrocarbon radical, and
b is an integer of at least 2.

4. Foamable composition according to one or more of Claims 1 to 3, **characterized in that** salts of carboxylic acids are used as component (G).

5. Foamable composition according to one or more of Claims 1 to 4, **characterized in that** trimerization catalyst (G) is used in amounts of 0.1 to 10.0% by weight, based on the total weight of the foamable preparation of the present invention.

6. Foamable composition according to one or more of Claims 1 to 5, **characterized in that** it contains
(A) siloxanes of formula (I),
(B) polyisocyanates,
optionally
(C) fillers,
optionally
(D) emulsifiers,
optionally
(E) physical blowing agents,
optionally
(F) catalysts to speed up foam formation,
(G) trimerization catalysts,
optionally
(H) chemical blowing agents, and
optionally
(I) additives,
wherein the preparations of the present invention comprise three or more isocyanate groups and also contain at least one blowing agent selected from components (E) and (H).

7. Process for preparing silicone-containing polyisocyanurate foams, **characterized in that** siloxane (A), polyisocyanate (B) and trimerization catalyst (G) and also at least one blowing agent are mixed and allowed to react.

8. Foams obtainable by reaction of siloxanes (A), polyisocyanate (B) and trimerization catalyst (G) with at least one blowing agent.

## Revendications

1. Compositions moussables contenant des siloxanes
(A) de formule
V-(NHC(O)R¹R²)ₚ₋ₘ₋ₙ(NHC(O)R¹R⁴[SiR₂O]ₐ-SiR₂R⁴R¹H)ₘ(NHC(O)NR⁵₂)ₙ (I)
où
V signifie un radical hydrocarboné p-valent, qui peut contenir des hétéroatomes,
R peut être identique ou différent et signifie un radical hydrocarboné monovalent, le cas échéant substitué,
R¹ peut être identique ou différent et signifie -O-, -S- ou -NR³-,
R² peut être identique ou différent et représente un atome d'hydrogène et des radicaux hydrocarbonés monovalents, le cas échéant substitués,
R³ signifie un atome d'hydrogène ou un radical hydrocarboné monovalent, le cas échéant substitué,
R⁴ peut être identique ou différent et signifie un radical hydrocarboné divalent, le cas échéant substitué, qui peut être interrompu par des hétéroatomes,
R⁵ peut être identique ou différent et signifie un atome d'hydrogène ou un radical hydrocarboné, le cas échéant substitué,
a signifie un nombre entier supérieur ou égal à 1,
p signifie un nombre entier supérieur ou égal à 2,
m signifie un nombre entier supérieur ou égal à 1,
n signifie un nombre entier supérieur ou égal à 1,
à condition que p soit supérieur ou égal à m + n,
(B) des polyisocyanates et
(G) des catalyseurs de trimérisation.

2. Composition moussable selon la revendication 1, **caractérisée en ce que** p vaut m + n.

3. Composition moussable selon la revendication 1 ou 2, **caractérisée en ce qu'**on utilise comme polyisocyanates (B) ceux de formule générale
Q(NCO)_{b} (V)
où
Q signifie un radical hydrocarboné b-fonctionnel, le cas échéant substitué et
b signifie un nombre entier d'au moins 2.

4. Composition moussable selon l'une ou plusieurs des revendications 1 à 3, **caractérisée en ce qu'**on utilise, comme composant (G), des sels d'acides carboxyliques.

5. Composition moussable selon l'une ou plusieurs des revendications 1 à 4, **caractérisée en ce que** le catalyseur de trimérisation (G) est utilisé en des quantités de 0,1 à 10,0 % en poids, par rapport au poids total de la préparation moussable selon l'invention.

6. Composition moussable selon l'une ou plusieurs des revendications 1 à 5, **caractérisée en ce qu'**il s'agit d'une composition contenant
(A) des siloxanes selon la formule (I),
(B) des polyisocyanates, le cas échéant
(C) des charges, le cas échéant
(D) des émulsifiants, le cas échéant
(E) des agents gonflants physiques, le cas échéant
(F) des catalyseurs qui accélèrent la formation de mousse,
(G) des catalyseurs de trimérisation, le cas échéant
(H) des agents gonflants chimiques et le cas échéant
(I) des additifs,
les préparations selon l'invention présentant au moins trois groupes isocyanate et au moins un agent gonflant, choisi parmi les composants (E) et (H).

7. Procédé pour la préparation de mousses de polyisocyanurate contenant du silicium, **caractérisé en ce qu'**on mélange et laisse réagir le siloxane (A), le polyisocyanate (B) et le catalyseur de trimérisation (G) ainsi qu'au moins un agent gonflant.

8. Mousses, pouvant être préparées par transformation de siloxanes (A), de polyisocyanate (B) et de catalyseur de trimérisation (G) avec au moins un agent gonflant.
